# EUROPEAN PATENT SPECIFICATION

(11) **EP 2 602 087 B1**
(45) Date of publication and mention of the grant of the patent: **18.03.2015**
(21) Application number: 12008166.6
(22) Date of filing: 06.12.2012
(51) Int. Cl.: B29C 47/68, B29C 47/08, B01D 29/96

(54) **Apparatus and process for filtering plastic materials**
Vorrichtung und Verfahren zum Filtern von Kunststoffmaterialien
Appareil et procédé permettant de filtrer des matières plastiques

(30) Priority: 06.12.2011 IT MI20112237
(43) Date of publication of application: 12.06.2013
(73) Proprietor: FARE' S.p.A., 21054 Fagnano Olona (IT)
(72) Inventor: Fare', Rosaldo, 21054 Fagnano Olona (IT)
(74) Representative: Gislon, Gabriele

(56) References cited:
- EP-A1- 0 925 904
- WO-A1-2010/138602
- JP-A- 55 123 439
- DATABASE WPI Week 198944 Thomson Scientific, London, GB; AN 1989-318580 XP002692250, -& JP 1 108019 A (NIPPON STYRENE PAPER KK) 25 April 1989 (1989-04-25)

## Description

The present invention relates to an apparatus and process for filtering plastic materials, generally in the fluid state. More specifically, the invention relates to a filtering apparatus provided with both a system for automatically replacing the filters and a system for cleaning the filters with a return flow.

Particularly, the invention relates to the filtration of polymer masses derived from recycling; such masses are obtained from recoverable materials or waste materials, and they are melted and fed under pressure through filters, generally formed as metal grids to intercept pollutants such as ashes, dusts, paper, metals, sugars, wood, glass and the like.

During the filtration process, the build-up of debris on the filters of the system leads to a progressive clogging of the filter meshes, thus decreasing the efficiency of the entire process. When the efficiency of the filters is decreased excessively, the filters are required to be cleaned and, if cleaning is ineffective, it is necessary to replace them. Therefore, various systems have been devised in which the filters can be automatically cleaned by means of a reverse flow of polymer without requiring to be removed and completely replaced when their efficiency is decreased.

IT01277735 describes a filtering unit for thermoplastic materials which allows the filters of systems for processing recycled thermoplastic materials, such as extruders for example, to be cleaned. In that patent, the fluid material is fed under pressure through a system of filters whose cleaning is automatically activated when a pressure drop occurs downstream of each filter. The filters are stationary and the cleaning of the filters is carried out by reversing the flow of filtered fluid material at a low pressure. International Patent Application WO2008/104863 in the name of the Applicant describes a device for filtering plastic materials provided with a position for cleaning the filter in a counterflow mode.

US5417856, corresponding to WO92/16351, discloses an apparatus for filtering a thermoplastic material, comprising a base block in which a sliding body is movable, the sliding body having mounted thereto a filter and a reservoir with piston. During the filter cleaning phase, the cleaned polymer previously stored within the reservoir, which is movable along with the support, is forced by the piston through the filter in a counterflow direction up to a discharge channel. As in the above mentioned documents, the discharge channels are centered with respect to the filter and are smaller in diameter than the filter. Although the above discussed solutions provide a system in which the filter is subjected to a flow of polymer in counterflow mode, they suffer from considerable drawbacks during the filter replacement operations which have to be performed when impurities can no longer be satisfactorily removed from the filter after a series of cleaning cycles, thus requiring the replacement of the filter.

In fact, filter replacement operations are not easy and require a manual intervention by an operator.

In US5417856, filter replacement is performed by sliding the filter out of the base assembly of the device and then making it accessible to an operator who manually proceeds to the removal of the exhausted filter as well as to the installation of a new filter.

In WO2008/104863, filter replacement is also performed by moving the filter out of the device by sliding the base body - having accommodated therein the filter - with respect to the base body of the device, thereby making the filter accessible to an operator for intervention purposes.

As just described, filter replacement operations, i.e. the ejection of the exhausted filter and the installation of a new filter, are generally performed manually by an operator.

Obviously, these operations are particularly difficult and dangerous to be carried out due to the high temperatures of the filter resulting from the hot thermoplastic fluid passing through the filter during filtration operations, as well as to the evolution of gases.

EP0925904 describes a device for filtering plastic materials in which the filter members are replaced by means of a first actuator which causes at first a filter-holder body to be moved and then the filter mesh to be ejected. More specifically, the device comprises a movable body provided with a housing in which the filter-holder body and the filter mesh are arranged. The movable body is moved to a replacement position in which an actuator allows the filter-holder body to be moved within the housing in such a way that the filter mesh protrudes out of the movable body. A scraper is provided for removing the filter mesh. Subsequently, a further actuator proceeds to the installation of a new filter mesh into the housing of the movable body.

In the filtering device according to document EP0925904, even though the device is designed to automatically eject the filter mesh to be replaced and install a new filter mesh, however, such operations are time-consuming because it is required to eject the filter mesh and then install a new filter mesh, thereby causing non-negligible interruptions in the filtering process. It follows that, in the apparatuses known in the art, the filters are not easy to be removed, and these operations very often require long times adversely affecting the efficiency of the filtering system, leading in some cases to long and therefore undesirable interruptions in the flow of thermoplastic material fed to the device.

Therefore, there is a need to implement an apparatus and process for filtering plastic materials which is fast, efficient and able to ensure that filters can be quickly and easily replaced and cleaned.

Object of the present invention is to solve problems of devices known in the art as briefly described hereinabove, by providing a filtering apparatus allowing the filters to be easily and quickly replaced without the need for manual intervention by an operator. A further object of the present invention is to increase the replacement speed of the exhausted filters, particularly by reducing the time elapsing between the ejection of the exhausted filter and the installation of the new filter.

These and other object are obtained by the present invention concerning an apparatus according to claim 1, comprising a base block, at least one sliding body which is movable within the base block, and at least one filter mounted on the sliding body and movable therewith between at least one filtering position, in which are provided at least one pipe for feeding the material to be filtered to the filter and at least one outlet pipe for discharging the filtered material from the filter, and at least one filter replacement position (S) in which means for ejecting the filter from the sliding body are provided. Advantageously, the at least one replacement position and the presence of ejecting means in such a position allow the filter replacement operations to be performed automatically and safely, thereby eliminating, or at least greatly reducing, the intervention by the operator as well as the exposure of the operator to gases and high temperatures.

The ejecting means move the filter to be removed from the apparatus by applying thereto a force which causes the filter ejection from the sliding body. More specifically, the ejecting means contact and move, directly or indirectly, the filter in a direction (Y) which is either orthogonal or tilted with respect to the sliding direction (X) of the sliding body, so as to eject it from the sliding body.

According to one aspect of the present invention, the ejecting means are selected from linear actuators, hydraulic pistons, pneumatic pistons or other similar means which can contact the filter and move it with respect to the sliding body in which it is accommodated, as mentioned hereinabove, preferably in a direction which is either orthogonal or tilted with respect to the movement direction of the sliding body of the apparatus.

The sliding body of the apparatus is provided with one or more filter housings which are sized so as to allow the filter to be installed and passed through the sliding body (from one side to the other side of the sliding body), i.e. the filters are installed into one side of the body and ejected from the other side of the sliding body.

Advantageously, passing the filter through the housing, from one side to the other side of the sliding body, allows the exhausted filter to be ejected and a new filter to be simultaneously installed with the use of ejecting means arranged at a side of the movable body. Particularly, according to a possible embodiment, the filter can pass through the sliding body from one side at which the installation of the filter occurs, to a side opposite to the first side of the sliding body at which the ejection of the filter takes place. Preferably, the two sides are two lateral surfaces of the movable body which are either orthogonal or tilted with respect to the center (or central axis) of the filter and/or of the housing section of the sliding body in which the filter is arranged and/or which is either aligned or tilted with respect to the direction of the thermoplastic material flowing inside the filter.

Particularly, according to one aspect of the present invention, the cross-section of the filter is smaller than the cross-section of the housing.

According to a preferred embodiment, the direction of movement (Y) imparted to the filter by the ejecting means is either aligned or tilted with respect to the center (or central axis) of the filter and/or of the housing section of the sliding body in which the filter is arranged, and/or such a direction is either aligned or tilted with respect to the thermoplastic material flowing inside the filter. In other words, the ejecting means directly or indirectly move at least one filter and/or at least one new filter in a direction (Y) which is either aligned or tilted with respect to the center (or central axis) of the filter and/or either aligned or tilted with respect to the thermoplastic material flowing inside the filter.

It should be noted that the term 'aligned' is intended to mean both the case in which the direction is coincident or parallel with respect to the center (or central axis) of the filter and/or of the housing section of the sliding body in which the filter is arranged and/or with respect to the thermoplastic material flowing inside the filter.

According to one aspect of the present invention, in the replacement position, the filter is moved out of the base block by means of the sliding body and the ejecting means are external to the base block and constrained thereto in the replacement position to which the filter is moved by displacing the sliding body with respect to the base body. Advantageously, since the filter can be passed through the sliding body of the apparatus from one side to the other side of the latter, the filter is installed at one side of the sliding body and ejected from an opposite side of the sliding body by the ejecting means.

According to a further aspect of the present invention, the ejecting means also allow a new filter to be automatically installed within the sliding body, and the ejection of the exhausted filter and the installation of the new filter can be advantageously carried out simultaneously or separately, as will be described more in detail hereinafter. It should be noted that, by simultaneously carrying out the ejection of the exhausted filter and the installation of the new filter, the new filter is interposed between the ejecting means and the filter to be replaced which is located within the sliding body.

In fact, the ejecting means can also directly or indirectly move at least one new filter in the direction (Y) which is either orthogonal or tilted with respect to the sliding direction (X) of the sliding body, so as to install the new filter into the sliding body.

Advantageously, the ejection of the exhausted filter and the simultaneous installation of the new filter can significantly decrease the time required to carry out such operations. It should also be noted that, prior to the replacement of the filter, the apparatus according to the present invention can provide for a position (step) in which the filter is cleaned, generally by means of a technique known as "back-flow" (back-washing or back-flushing or flush-back) technique, as described in the prior documents briefly discussed above, and particularly in WO2008/104863 in the name of the Applicant, for example.

In fact, according to the present invention, the sliding body is also movable, with the filter, within the base block to at least one filter cleaning position (CF) in which there are provided cleaning means for feeding a pressurized flow of filtered material through the filter in a direction opposite to the filtering direction.

According to the invention, in the cleaning position, the cleaning means intended for feeding the material in counterflow mode are external to the base block and constrained thereto, i.e. said means are secured to the base body while the filter is translated, with the sliding body, to either the filtering or cleaning position.

According to a preferred aspect of the invention, the cleaning means comprise a reservoir, a piston and an actuator, and the apparatus is provided with at least one bypass pipe for connecting the outlet pipe for discharging the filtered material to the cleaning means, and particularly to the reservoir.

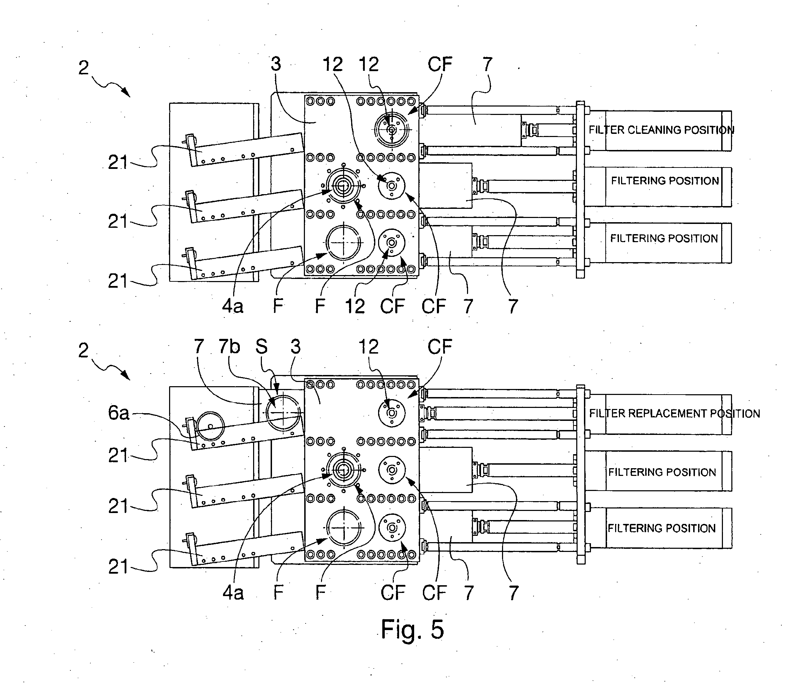

Object of the present invention is also a filtering system characterized by at least one filtering apparatus according to the invention as previously described. In a preferred embodiment there are two or more sliding bodies, preferably three sliding bodies (Figure 5), or there are two or more filtering apparatuses, in order to ensure a continuous operation of the process for the production of the filtered fluid when one of the units cannot be temporarily used for the cleaning of the filter.

Furthermore, according to a further possible embodiment, the sliding body of the apparatus according to the present invention can be provided with two or more filter housings so as to always have an operative filter arranged in the filtering position.

A further object of the present invention is a process for filtering thermoplastic materials using an apparatus of the above described type, comprising the steps of: moving the sliding body with respect to the base block so as to move the filter to at least one filtering position (F) in which it is interposed between at least one pipe for feeding the material to be filtered to the filter and at least one outlet pipe for discharging the filtered material from the filter; moving the filter to at least one replacement position (S) by the movement of the sliding body with respect to the base block; actuating ejecting means of the apparatus in order to move, directly or indirectly, the filter preferably in a direction (Y) (either orthogonal or tilted with respect to the sliding direction X of said sliding body) so as to eject the filter from the sliding body.

According to a preferred embodiment, the ejecting means move the filter through the sliding body, preferably from one side to the other side of said sliding body, in fact, as already mentioned above, the sliding body comprises at least one filter housing which is sized so as to allow the filter to be accommodated within and passed through the sliding body from one side to the other side of the sliding body itself. Furthermore, the ejecting means install the filter on one side of the sliding body and eject it from an opposite side of the sliding body by virtue of the fact that, as mentioned above, the filter can be passed through the sliding body within the corresponding housing. As mentioned above, the actuation of the ejecting means of the apparatus can also be used to install a new filter into the sliding body. Particularly, the step of actuating the ejecting means for ejecting the filter from the sliding body and the step of actuating said ejecting means for installing the new filter can be performed simultaneously or separately. Advantageously, the ejection of the exhausted filter and the simultaneous installation of the new filter can significantly decrease the time required to carry out such operations.

In this circumstance, according to one aspect of the present invention, the process comprises the step of actuating the ejecting means for directly or indirectly moving the filter in order to eject it from the sliding body and, simultaneously, for moving at least one new filter so as to install it into said sliding body. Particularly, the new filter is advantageously interposed between the ejecting means and the filter to be replaced for the simultaneous movement thereof, so that the new filter is pushed against the exhausted filter by the ejecting means ejecting it from the housing, while new filter is fitted into said housing.

In order to withstand the thrusts required for the replacement, the filter comprises two portions which are coupled to each other so as to contain one or more filter meshes therebetween. As mentioned above, the process comprises the step of actuating the ejecting means for directly or indirectly moving said filter in a direction (Y) which is either orthogonal or tilted with respect to the sliding direction (X) of the sliding body so as to eject the filter from the sliding body. According to one aspect of the invention, the process comprises the step of actuating the ejecting means for directly or indirectly moving at least one filter (6) and/or at least one new filter (6A) in a direction (Y) which is either aligned or tilted with respect to the center (or central axis) of the filter, and/or aligned or tilted with respect to the thermoplastic material flowing inside the filter. It should be noted that, according to a possible embodiment, the filtering process comprises the additional step of moving the filter at least once from the filtering position (F) to a cleaning position (CF), in which a filtered material in the fluid state is fed to the filter in a direction which is opposite to the filtering direction, and then moving said filter to the replacement position (S).

According to the invention, when the filter is required to be cleaned, the filtered material is transferred into a reservoir through a bypass pipe which allows the reservoir to be filled by connecting it to the outlet pipe for discharging the filtered material. Subsequently, this filtered material is forced through the filter in a direction opposite to the filtering direction under a pressure in the range from 80 to 400 bar, preferably from 200 to 400 bar, more preferably of 400 bar, and with a polymer discharge time in the range from 0.2 to 10 seconds, preferably from 0.5 to 5.0 seconds, more preferably from 1 to 2 seconds. The filtering apparatus according to the present invention may be generically referred to as a HP Flushback system, in which HP stands for High Pressure.

It should be noted that, in the apparatus according to the present invention, combining automatic filter-ejecting means in a replacement position with cleaning means, preferably in a counterflow (flushback) way, can greatly improve the efficiency and operational speed of the filtering apparatus. In fact, after several flushback cleaning cycles, only one flushback treatment is no longer sufficient to obtain a sufficient cleaning effect; in this case, it becomes necessary to either replace the filter or sequentially perform multiple flushback treatments, resulting in long times for both operations. With the present invention, after one or more cleaning cycles, the replacement of the filter can be performed quickly and easily (without the intervention of an operator) and without the inconvenience of interrupting the filtering process for long times, as it occurs with the devices known in the art and briefly discussed hereinabove.

Furthermore, as mentioned above, the presence of at least one filter housing which allows the filter to be passed through the movable body of the apparatus can considerably simplify and speed up the operations for the replacement of the exhausted filter. In fact, passing the filter through the housing of the sliding body, from one side to the other side thereof, and particularly installing it at one side and ejecting it from the side opposite to the first side, allows to automatically perform the ejection of the exhausted filter as well as the installation of a new filter with the use of ejecting means which are arranged only at one side of the filtering apparatus.

These advantages are even more evident when the ejection of the exhausted filter and the installation of the new filter are performed simultaneously with the use of the same ejecting means. In fact, passing the filter through the housing of the sliding body, from one side to the other side thereof, allows the new filter to be simultaneously installed by the ejecting means.

Furthermore, the present invention relates to a filter comprising one or more filter meshes, preferably metal filter meshes, and at least two portions or half-parts which are coupled to each other so as to contain the filter mesh(es) therebetween. Advantageously, the thus-obtained filter can be easily cleaned and reused after having been ejected from the filtration apparatus. In fact, used filters in the apparatuses known in the art are formed by a filter mesh and a corresponding filter-holder body, and when the filter mesh is required to be replaced, it is removed from the filter-holder body by scraping operations, for example, which actually make the filter mesh hard to be reused. On the contrary, in the filters according to the present invention, the filter mesh(es) is/are housed between the at least two mutually coupled portions of the filter, allowing the installation and ejection operations to be performed without damaging or straining the filter meshes, thereby greatly extending the duration of the filter itself.

The invention will now be described in more detail, by way of illustration and not limitation, with reference to the accompanying drawings in which:
- Figure 1 shows a top section view of a sliding body of a filtering apparatus according to the invention in a filtering position;
- Figure 2 shows a top section view of a sliding body of the filtering apparatus of Fig. 1 during the pre-charging step of the piston for the cleaning step;
- Figure 3 shows a top section view of a sliding body of the filtering apparatus of Fig. 1 in the cleaning position;
- Figure 4 shows a top section view of a sliding body of the filtering apparatus of Fig. 1 in a filter replacement position;
- Figure 5 is a side view of the filtering apparatus according to the present invention as provided with three bodies sliding in the base body.

Figure 5 is a side view of a possible embodiment of the filtering apparatus 2 according to the present invention. The Figure shows two filtering apparatuses 2 each comprising three mutually superimposed sliding bodies 7 within the base block 3.

Obviously, the number of sliding bodies 7 of the apparatus can be changed as needed to always have one filter in the filtering position (F) while the other two filter are being replaced (position S) or subjected to the cleaning step (position CF).

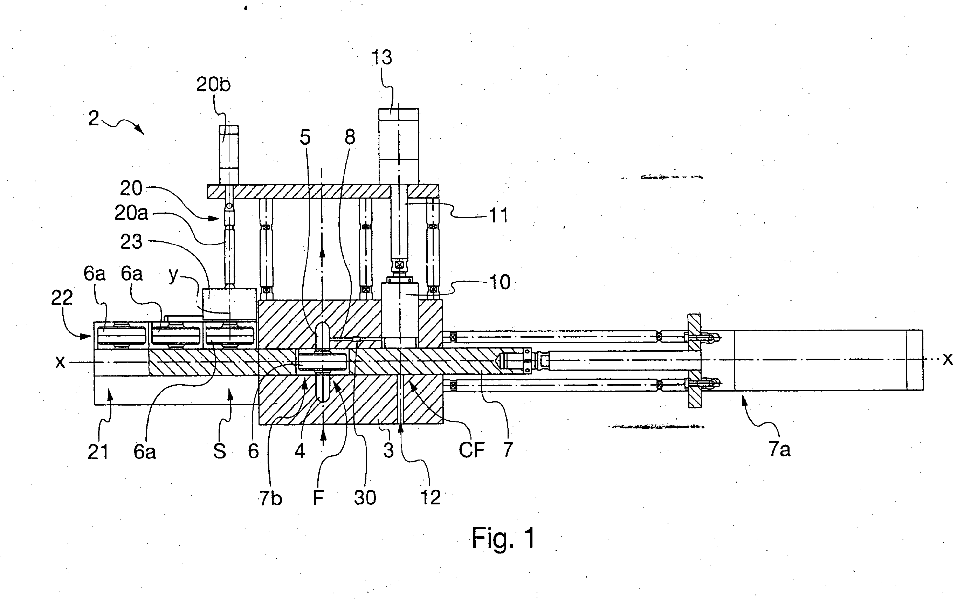

Figures 1 - 4 show a top section view of one sliding body 7 of the filtering apparatus 2 which is movable, with the filter 6 accommodated in a sliding body 7, within the stationary base block 3. Obviously, the operation of the other sliding bodies 7 is identical to that described hereinbelow with reference to Figures 1 - 4.

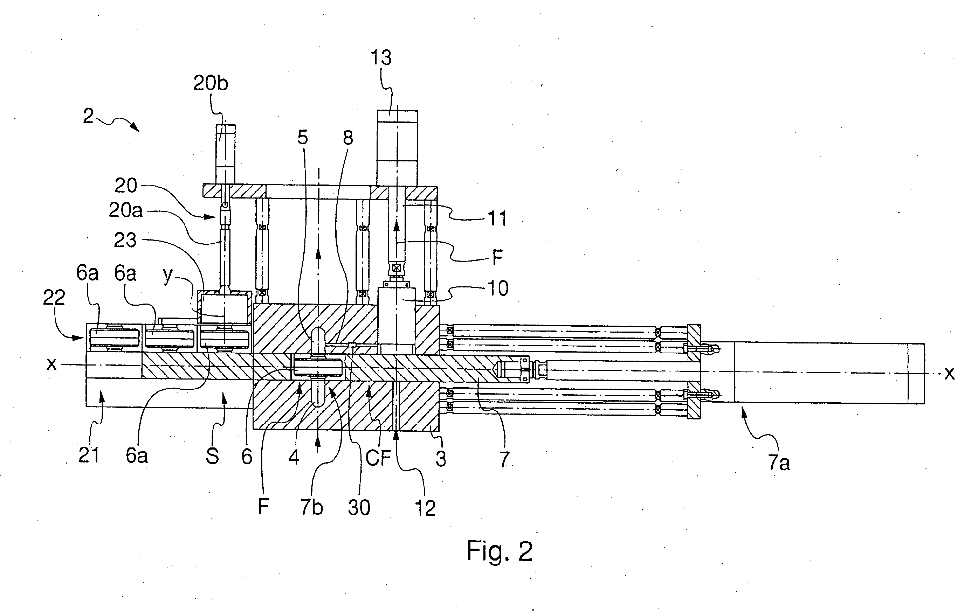

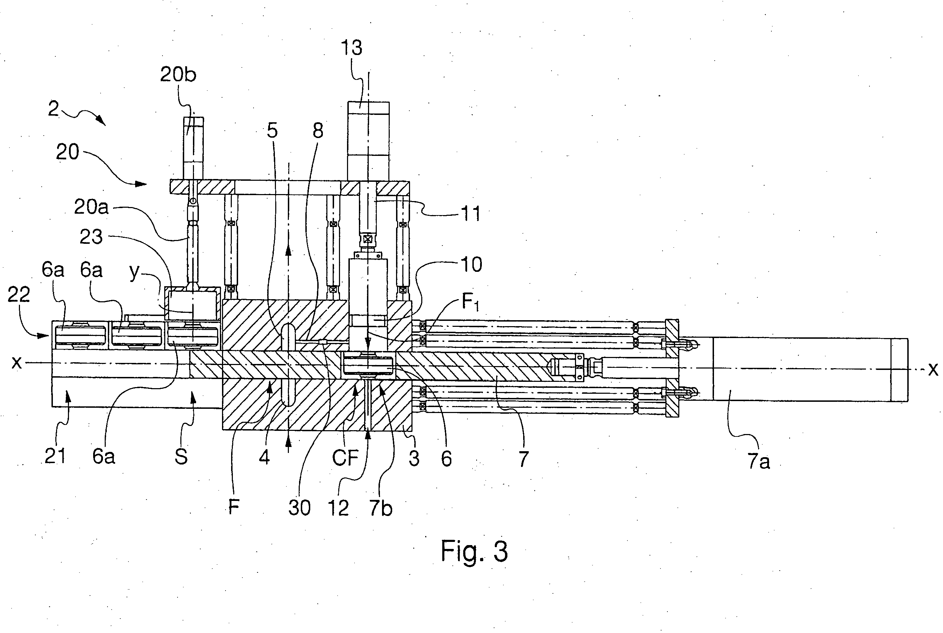

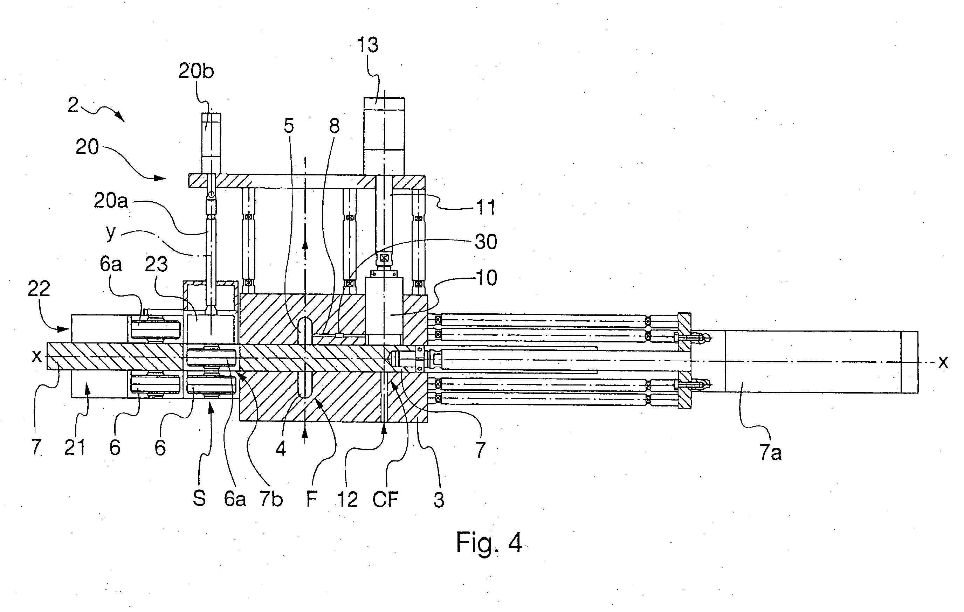

The sliding body 7 is movable with respect to the base block or body 3 in such a way that the filter 6 can be moved to the filtering position F (Figure 1), to the position S for replacing the filter 6 (Figure 4) and, according to a possible embodiment, even to a filter-cleaning position CF (Figures 2 and 3).

Preferably, the movement of the sliding body 7 with respect to the base block occurs along a direction X with the use of driving means which are known in the art such as, for example, hydraulic or pneumatic pistons 7a.

In the filtering position F, there are at least one inlet pipe 4 for the fluid mass to be filtered, at least one outlet pipe 5 for discharging the filtered material, and the filter 6 is interposed therebetween. It should be noted that, if the apparatus is provided with multiple sliding bodies as in the case illustrated in Figure 5, inlet pipes 4 and outlet pipes 5 for each of the filter-sliding body combinations are preferably connected respectively to one inlet section 4A (Figure 5) and one discharge section (not shown) formed in the base body 3.

Obviously, since the filter 6 is mounted on the sliding body 7, which is movable within the body base 3 in a direction orthogonal to the axis of the pipes of molten material, when the body 7 is translated, the filter 6 is moved therewith and thus transferred to the filtering position F (Figure 1), the filter replacement position S (Figure 4) or the cleaning position CF (Fig. 3), which are different from each other.

Obviously, according to other possible embodiments, the apparatus may also comprise multiple sliding bodies, otherwise more than one filter can also be fitted into the same sliding body 7, so as to have multiple filters available in the same filtering apparatus 2. Therefore, when one of the filters is subjected to the replacement step S, there is another filter operating in the filtering position F allowing the process to proceed without interruptions.

The filters 6 to be used in the apparatus according to the present invention comprise one or more superimposed meshes adapted to intercept possible impurities existing in the fluid mass. According to a preferred aspect, filters 6 are each formed by two preferably cylindrical half-parts which are coupled to each other with the interposition therebetween of one or more meshes adapted to intercept the impurities existing in the thermoplastic material to be filtered. Typically, filter meshes as well as half-parts are made of metal. Half-parts are strong enough to withstand thrusts applied by an ejector plunger 7a.

As illustrated in Figures, the sliding body 7 is provided with at least one housing 7b having a substantially cylindrical portion having arranged therein the filter 6 provided with a substantially cylindrical complementary shape.

Obviously, the housing 7b for the filter 6 can be shaped in other forms which are complementary to that of the filter in such a way that the filter can be properly fitted into the housing.

As shown in Figures, regardless of its shape, the housing 7b is sized so as to allow the filter 6 to pass through the sliding body 7, from a side to the other side thereof.

More particularly, the size of the housing 7b in cross-section is smaller than the size of the filter 6 in cross-section.

It should be noted that the sizes of housing and filters are such as not to compromise the seal during the passage of the material to be filtered.

Therefore, the filter 6 can be quickly installed and ejected by the ejecting means 20 which causing the fitting of the filter into one side of the sliding body 7 and ejecting it from the opposite side after it is completely passed through the sliding body 7.

As can be seen in figures, according to a possible embodiment, the installation side and the ejection side lie on side surfaces of the sliding body 7 which are either orthogonal or tilted with respect to the center (or central axis) of the filter and/or of the housing section of the sliding body in which the filter is arranged and/or which is either aligned or tilted with respect to the direction of the thermoplastic material flowing in the filter. In the embodiment illustrated in Figures, the housing 7b is passing through the sliding body 7, and it is sized so as to allow said filter (6) to be accommodated within and passed through said sliding body (7). Particularly, the cross-section of the housing is constant or substantially constant and it allows the filter to be pushed through the housing.

According to an embodiment, the filter 6 can be installed into the housing 7b while keeping a certain clearance amount, in other words, sizes of the filter in cross-section are not identical to those of the housing 7b in cross-section, thus leaving therebetween a space which, although very small, is in the order of some tenths of mm (e.g. 0.2-0.8 mm). Sizes of the filter 6 and the housing 7b are determined by design in such a way that the space existing therebetween is zeroed as a result of the thermal expansion of the filter due to the heat transferred from the thermoplastic material to the filter while operating, and particularly during the filtering step.

Thermal expansion of the filter allows a perfect seal to be obtained within the housing 7b.

According to a possible embodiment, a supporting member or filter-holder acting as a support for the filter 6 can be provided in the housing 7b.

The filter 6 opposes a resistance to the passage of the polymer to be filtered: this resistance is decreased when the filter is clean, but it increases over time as the meshes of said filter are occluded.

The increased occlusion of the meshes of the filter 6 results in an increased resistance of the filter against the passage of material, thereby establishing a differential pressure of the fluid in the feeding pipe 4 with respect to the outlet pipe 5, which differential pressure, by suitable sensors connected to a controlling unit of the apparatus (not shown in the attached Figures) move the filter by displacing the sliding body 7 with respect to the base body 3 in the direction X up to either the cleaning position CF or the replacement position S. The controlling unit of the apparatus allows the automatic replacement of the exhausted filter 6 and the automatic insertion (installation) of a new filter 6A in a fully automated manner, by actuating the ejecting means 20 provided at the replacement position S of the apparatus.

In fact, the apparatus according to the present invention is also provided with filter-ejecting means 20 arranged at the replacement position S to which the filter is moved by displacing the sliding body 7, having accommodated the filter therein with respect to the base body 3.

The ejecting means allow the filter 6 to be removed from the sliding body 7 automatically by moving, directly or indirectly, the filter 6 in a direction Y either orthogonal or tilted with respect to the sliding direction X of the sliding body 7.

In the embodiment illustrated in Figures, the ejecting means 20 move the filter 6 in a direction Y which is orthogonal to the sliding direction X of the sliding body 7, and therefore the filter 6 accommodated therein, with respect to the base body 3. According to an aspect of the present invention, ejecting means move, directly or indirectly, the filter (6) in a direction (Y) either aligned or tilted with respect to the center (or central axis) of the filter, and/or either aligned or tilted with respect to the thermoplastic material flowing inside the filter.

It should be noted that the term 'aligned' is used herein to mean both coincident and parallel.

In the embodiment illustrated in Figures, the direction (Y) in which the ejecting means move the filter 6 is coincident with the center of the housing section 7b in which the filter 6 is arranged, and it is also coincident or parallel with the direction of the thermoplastic material flowing inside the filter.

As illustrated in Figure 4, in the replacement position S, the filter 6 is positioned out of the base block 3 as a result of the displacement of the sliding body 7.

Moreover, in the replacement position S, the ejecting means 20 are preferably arranged externally with respect to the base block 3 and constrained thereto.

As can be seen from Figures, the ejecting means 20 are provided with at least one portion 23 adapted to contact the filter, and they are selected from linear actuators, hydraulic pistons, pneumatic pistons or similar means adapted for contacting the filter and applying a force thereto in order to move it with respect to the sliding body 7. In the embodiment illustrated in Figures, the ejecting means 20 comprise a piston 20a which is moved by a hydraulic or pneumatic actuator 20b. The piston 20a can be moved (forwards and backwards) along the direction Y by means of the actuator 20b.

It should be noted that the phrase "directly or indirectly move" the filter has been used herein to indicate that the ejecting means can directly contact the filter to be ejected, or even the filter mesh(es) thereof, to impart a movement thereto in the direction Y so as to eject it from the sliding body 7, otherwise, as shown in Figure 4, they can move the exhausted filter 6 with the interposition of a new filter 6A which has to be installed into the sliding body 7.

In the latter case, the ejecting means 20 contact and move the new filter 6A in a direction Y so as to install the new filter 6A into the sliding body 7. Simultaneously, the new filter 6A contacts and moves the exhausted filter 6 so as to eject it from the sliding body 7.

It follows that moving the ejecting means 20 along the Y direction allows both the exhausted filter 6 to be ejected from the sliding body 7 and a new filter 6A to be installed into the sliding body 7 with one operation.

As will be described in more detail below, the ejection of the exhausted filter 6 and the installation of the new filter 6A may be carried out separately (even with the use of multiple separate ejecting means), otherwise the two operations can be performed simultaneously when the displacement of the ejecting means 20 cause the ejection of the exhausted filter 6 with the interposition of a new filter 6A.

The new filter 6A is installed into the sliding body 7 through the same displacement imparted by the ejecting means.

In fact, it should be considered that the ejecting means 20 allow both one or more exhausted filters to be ejected and one or more new filters to be installed.

Furthermore, the apparatus according to the present invention comprises at least one support 21 for supporting one or more filters 6 ejected from the sliding body 7 by the ejecting means 20. In the embodiment illustrated in attached Figures, the support comprises a slant guide arranged downstream of the sliding body 7 along the direction Y in which the filters 6 ejected from the sliding body 7 are moved. Hence, when the exhausted filter 6 is pushed along the direction Y, it is ejected from the housing 7b of the sliding body 7 to reach the support 21. As shown in Figure 5, the support 21 is tilted so as to clear the ejected filters 6 from the replacement position S.

Furthermore, the apparatus 2 according to the present invention comprises at least one support 22 for supplying one or more new filters 6A to be installed into the sliding body 7 by the ejecting means 20. In the embodiment illustrated in Figures, such a support comprises a slant guide on which one or more new filters 6A to be installed into the sliding body 7 can be disposed, allowing to arrange at least one filter at the ejecting means 20 in the replacement position S.

The process for filtering the fluid mass fed to the apparatus according to the present invention comprises the step of displacing the sliding body 7 with respect to the base block 3 (along the direction X) in order to move the filter 6 to the filtering position F (Figure 1), in which the filter is interposed between the feeding pipe 4 and the outlet pipe 5 for discharging the material from the filter.

When the filter is required to be replaced, the sliding body 7 is moved, along with the exhausted filter 6, to the replacement position S (Figure 4) by displacing the sliding body 7 with respect to the base block (3) in the direction X. In such a position, the ejecting means 20 are actuated, and particularly, the piston 20a is advanced towards the sliding body so as to directly or indirectly move the filter 6 and therefore eject it from the sliding body 7.

According to an aspect of the present invention, ejecting means are actuated in order to directly or indirectly move the filter 6 in a direction Y which is either orthogonal or tilted with respect to the sliding direction X.

According to a further aspect of the present invention, the ejecting means are actuated in order to directly or indirectly move the exhausted filter 6 and/or a new filter 6A in a direction (Y) which is either aligned or tilted with respect to the center (or central axis) of the filter and/or either aligned or tilted with respect to the thermoplastic material flowing inside the filter.

It should also be noted that the actuation of the ejecting means 20 causes the filter to be directly or indirectly moved in a direction Y which is either aligned or tilted with respect to the center (or central axis) of the filter and/or either aligned or tilted with respect to the thermoplastic material flowing inside the filter.

As mentioned above, the filter can be directly moved by the ejecting means which contact and eject it from the sliding body 7 into the support 21 which is located externally with respect to the sliding body and the base body 3.

In this case, subsequently, there is provided a step of installing a new filter 6A, always carried out at the replacement position S by actuating the ejecting means 20 which directly or indirectly move a new filter 6A in the direction Y (orthogonal or tilted with respect to the sliding direction X and/or aligned or tilted with respect to the center (or central axis) of the filter and/or aligned or tilted with respect to the thermoplastic material flowing inside the filter), so as to install the new filter 6A into the sliding body 7. Obviously, the steps of ejecting the exhausted filter 6 and installing the new filter 6A can be carried out simultaneously, i.e. by moving the exhausted filter 6 indirectly, through the ejecting means 20. In other words, the new filter 6A is moved by the ejecting means 20 which fit it into the sliding body 7 while ejecting the exhausted filter 6A, as shown in Figure 4.

In detail, the piston 20a is advanced in the direction Y toward the sliding body 7, thereby pushing the new filter 6A into the housing 7b and simultaneously ejecting the exhausted filter 6 from the housing 7b of the sliding body 7.

It is clear that the filter-replacing step can be carried out automatically without the need for manual intervention by an operator.

As already mentioned, the apparatus according to the present invention is preferably also provided with a filter-cleaning position to which the filter is moved by displacing the sliding body 7 with respect to the base body 3. More in detail, the sliding body 7 along with the filter 6 is movable as well within the base block 3 to at least one filter-cleaning position (CF) in which cleaning means 9 are provided for feeding a pressurized flow of filtered material through the filter 6 in a direction opposite to the filtering direction.

It follows that the process for filtering the molten material according to the present invention comprises at least one cleaning cycle, i.e. the step of moving the filter 6 at least once from the filtering position F to the cleaning position CF, in which the filter 6 is fed with filtered material in the fluid state from a direction opposite to the filtering direction so as to eject the impurities built-up on the filter.

Hence, when the meshes of the filter 6 begin to become clogged, the resistance of the filter 6 against the passage of material is no longer negligible and, therefore, a cleaning step is required that is carried out by moving the filter 6 to the position CF and feeding cleaned material through the filter 6 in a counterflow (backflush) mode.

At the cleaning position CF, the base body 3 comprises cleaning means 9 preferably comprising a reservoir cylinder 10, a piston 11, and an actuator 13 for the piston 11. A channel 12 for discharging the contaminated polymer leaving the filter is provided at the side of the body 3 opposite to said means 9. The size of the pipe 12 is such as not to oppose a significant resistance to the polymer leaving the filter and contaminated with debris removed from the filter 6.

More in detail, at the cleaning position CF, the filtering apparatus is provided with means 9 for feeding the filter in a counterflow mode, i.e. in a direction opposite to the filtering direction, with a flow of previously filtered material at a pressure much greater than that existing in the pipe 4 intended for feeding the material to be filtered.

Said means 9 for feeding the polymer in counterflow mode are located externally and secured to the base block 3, thus allowing the piston-cylinder system to be maintained at room temperature and therefore avoiding any damage resulting from the exposure of the system to the high temperatures of the molten polymer mass.

Then, the means 9 are stationary at the cleaning position CF and not movable with the body 7, as instead occurs in the prior art. This allows the piston-cylinder system to be fed with oil at high pressures, since it is possible to use rigid supply pipes made of stainless which therefore enable oil pressures higher than those possible with hoses. Preferably, the oil fed to the piston-cylinder system is at a pressure in the range from 200 to 400 bars, more preferably of 400 bars.

The used high pressures allow the polymer previously sucked into the reservoir of the piston-cylinder system to be discharged within 1 or 2 seconds.

Means of any type can be used, provided that they are able to pressurize the filtered material to the required pressure. In the shown preferred embodiment, the means 9 comprise a reservoir 10 for containing the filtered material, i.e. the material passed through the pipe 4 and the filter 6 and intended to be fed to the filter 6 in counterflow mode during the filter-cleaning step. The reservoir 10 is formed as a cylinder that is part of a piston-cylinder system adapted for pressurizing the filtered material during the filter-cleaning step. As can be seen in Figures, the piston 11 is actuated by an actuator 13 which is known per se in the art, for example a hydraulic actuator.

For example, a suitable actuator is of a type which can impart a pressure of at least 80 bar, and preferably from 200 to 400 bars, and still more preferably of 400 bars, to the material in the reservoir-cylinder 10. Actuators of this type are commercially available and adjustable in terms of pressure and flow rate. The discharge speed is between 0.2 and 10 seconds, preferably 0.5-5.0 seconds, more preferably 1-2 seconds. Usually, this speed is related to the time required to empty the reservoir, in this case the time required for the piston to reach the stroke end and the piston to pass through the filter, i.e. the cleaning time.

The filtering apparatus 2 further comprises means for feeding the filtered material to the above described reservoir 10; preferably, these means comprise a bypass pipe 8 connected to the outlet pipe 5 leading to the reservoir-cylinder 10. The apparatus is also provided with means 30 for controlling the flow through the bypass pipe 8, such as an electro-valve or a non-retum valve, so as to prevent the polymer fed to the filter in counterflow mode from passing through the pipe 8 and reaching the outlet pipe 5 during the filter-cleaning step.

The process for cleaning the filter 6 involves feeding said filter, from a direction opposite to the filtering direction, with filtered material at a pressure greater than that of the material to be filtered in the pipe 4 (or the filtered material in the pipe 5).

Obviously, other embodiments of the filter-cleaning position (step) can be used, such as that described in application WO2008/104863 in the name of the Applicant, for example, in which the branch pipe is not directly connected to the outlet pipe 5, and the sliding body 7 acts as a "valve" to open and close several pipes in the base block 3 depending on its position.

Particularly, in the pre-filling step of the reservoir 10 as illustrated in Figure 2 of WO'863, a portion of the filter housing continues to connect the inlet channel for the material to be filtered to the outlet channel for the filtered material, whereas portion thereof is connected to the inlet of the branch pipe which allows the filtered material to flow into the reservoir-cylinder.

The filter-cleaning process according to the present invention will now be described in detail with reference to Figures 2 and 3 considering that, as already discussed hereinabove, the cleaning of the filter can be performed one or more times during the filtration before proceeding to the replacement of the filter. Obviously, the movement of the filter 6 to the cleaning position may be performed periodically or under a manual control or when a preset pressure threshold value is achieved downstream of the filter; this threshold value corresponds to a degree of filter occlusion which can compromise its efficiency.

In Figure 1 the configuration existing in the filtering position is shown, in which the filter 6 is aligned with the inlet channel 4 for the material to be filtered and with the outlet channel 5 for the filtered material. Preferably, during the filtering step, the flow-control means 30 located within the branch channel 8 are closed so as to prevent a flow therethrough.

When the filter 6 is required to be cleaned, the flow-control means are opened and part of the flow of polymer material passes through the bypass pipe 8 so as to fill the reservoir 10.

This step, referred to as a pre-filling step, is illustrated in Figure 2, and according to one embodiment, the cylinder-piston assembly of the reservoir 10 is slowly retracted to allow the polymer material to flow into the reservoir, as indicated by the arrow F. When the operation of pre-filling the reservoir 10 has been completed, the body 7 slides until it reaches the filter-cleaning position CF, as shown in Figure 3; in this step, the filter 6 is interposed between the reservoir 10 and a discharge channel 12 intended for ejecting out the material produced during the cleaning of the filter.

As mentioned above, the material is held within the reservoir for a time which is zero or very short in order to prevent a change in its characteristics, for example to prevent the material from being cooled. Therefore, preferably, the filter-cleaning step CF is carried out immediately after the end of the step of filling the material into the reservoir 10. The filtered material previously collected within the cylinder 10 of the means 9 is forced under pressure through the filter 6 by means of the piston 11 actuated by the actuator 13 (as indicated by the arrow F1). The direction of the cleaning flow is therefore opposite to the filtering direction.

The pressure used to force the filtered material through the filter in the direction opposite to the filtering direction is in the range from 80 to 400 bar, preferably from 200 to 400 bar, more preferably of 400 bar, and the polymer discharge time is in the range from 0.2 to 10 seconds, preferably from 0.5 to 5.0 seconds, more preferably from 1 to 2 seconds.

When the cleaning of the filter has been completed, the body 7 is moved in such a way that the filter 6A is returned back directly to the filtering position, as shown in Figure 1.

Obviously, one or more filtering apparatuses according to the present invention, provided with ejecting means for the automatic replacement of the filter, can be used in a system for processing thermoplastic material, for example an extruder, comprising a portion for plasticizing the material, at least one inlet channel for feeding the material to be filtered, and at least one outlet channel for discharging the filtered material.

The filtering process is preferably implemented with the use of two or more filtering apparatuses so as to ensure a continuous operation of the system for processing thermoplastic material even when one of the filters is being cleaned.

## Claims

1. Apparatus (2) for filtering thermoplastic materials in the fluid state, comprising a base block (3), at least one sliding body (7) which is movable within said base block (3), and at least one filter (6) mounted on said sliding body and movable with it between at least one filtering position (F) in which at least one pipe (4) for feeding the material to be filtered to the filter (6) and at least one outlet pipe (5) for discharging the filtered material from the filter are provided, and at least one filter replacement position (S) in which means (20) for ejecting said filter (6) from said sliding body (7) are provided, **characterized in that** said at least one sliding body (7) comprises at least one housing (7b) for said at least one filter (6) to allow said filter (6) to be accommodated within and passed through said sliding body (7) from one side to the other side of the sliding body.

2. Apparatus according to claim 1, wherein said ejecting means (20) install said filter (6) at one side of said sliding body (7) and eject said filter (6) from an opposite side of said sliding body (7), said filter (6) passing through said sliding body (7).

3. Apparatus according to claim 1 or 2, **characterized in that** said ejecting means (20) move said filter to eject it from said sliding body (7) and, simultaneously, move at least one new filter (6A) to install it into said sliding body (7).

4. Apparatus according to claim 3, wherein said at least one new filter (6A) is interposed between said ejecting means (20) and said filter (6) within said sliding body (7).

5. Apparatus according to any one of the preceding claims, wherein said ejecting means (20) move directly or indirectly said filter (6) in a direction (Y) which is either orthogonal or tilted with respect to the sliding direction (X) of the sliding body (7) to eject said filter (6) from said sliding body (7), and/ or wherein said ejecting means (20) move directly or indirectly at least one new filter (6A) in a direction (Y) which is either orthogonal or tilted with respect to the sliding direction (X) of said sliding body (7) to install said new filter (6A) into said sliding body (7).

6. Apparatus according to any one of the preceding claims, **characterized by** comprising, in said replacement position (S), at least one support (21) for supporting one or more filters (6) ejected from said sliding body (7) by said ejecting means (20) and by comprising, in said replacement position (S), at least one support (22) for supplying one or more new filters (6) to be installed into said sliding body (7) through said ejecting means (20).

7. Apparatus according to any one of the preceding claims, wherein said sliding body (7) is movable, with said filter (6), within said base block (3) to at least one filter cleaning position (CF) in which cleaning means (9) are provided for feeding a pressurized flow of filtered material through said filter (6) in a direction opposite to the filtering direction.

8. Apparatus according to claim 8, **characterized by** comprising at least one bypass pipe (8) for connecting said outlet pipe (5) to said cleaning means (9).

9. System for treating materials in the fluid state, comprising a source of material in the fluid state to be filtered and means for processing the filtered material, **characterized by** comprising at least one filtering apparatus (2) according to one of the preceding claims.

10. Process for filtering thermoplastic materials by means of an apparatus (2) according to any one of the preceding claims, comprising the steps of:
- moving said filter (6) in a direction (X) to at least one filtering position (F) by the movement of said sliding body (7) with respect to said base block (3);
- moving said filter (6) to at least one replacement position (S) by the movement of said sliding body (7) with respect to said base block (3) in the direction (X);
- actuating said ejecting means (20) to directly or indirectly move said filter (6) to eject it from said sliding body (7), wherein said ejecting means (20) move said at least one filter (6) through said sliding body (7), said at least one sliding body (7) comprising at least one housing (7b) for said at least one filter (6) to allow said filter (6) to be accommodated within and passed through said sliding body (7) from one side to the other side of the sliding body.

11. Process according to claim 10, wherein said ejecting means (20) install said filter (6) at one side of said sliding body (7) and eject said filter (6) from an opposite side of said sliding body (7), said filter (6) passing through said sliding body (7).

12. Process according to claim 10 or 11, comprising the step of actuating said ejecting means (20) to directly or indirectly move said filter (6) to eject it from said sliding body (7) and, simultaneously, to move said at least one new filter (6A) to install it into said sliding body (7).

13. Process according to claim 12, wherein said at least one new filter (6A) is interposed between said ejecting means (20) and said filter (6) for their simultaneous movement.

14. Process according to any one of claims 10 - 13, comprising the step of actuating said ejecting means (20) for directly or indirectly moving said filter (6) in a direction (Y) which is either orthogonal or tilted with respect to the sliding direction (X) of the sliding body (7) to eject said filter (6) from said sliding body (7).

15. Process according to any one of claims 10 - 14, comprising the step of actuating said ejecting means (20) for directly or indirectly moving a new filter (6A) in a direction (Y) which is either orthogonal or tilted with respect to the sliding direction (X) of said sliding body (7) to install said new filter (6A) into said sliding body (7).

16. Filter (6, 6A) comprising at least one filter mesh and at least two coupled portions, said at least one mesh being accommodated between said at least two portions.

## Patentansprüche

1. Vorrichtung (2) zum Filtrieren von thermoplastischen Materialien im fluiden Zustand, umfassend einen Basisblock (3), mindestens einen Gleitkörper (7), der innerhalb des Basisblocks (3) bewegbar ist, und mindestens einen Filter (6), der auf dem Gleitkörper montiert ist und mit ihm beweglich ist zwischen mindestens einer Filtrier-Position (F), in welcher mindestens eine Leitung (4) zum Zuführen des zu filtrierenden Materials zum Filter (6) und mindestens eine Auslassleitung (5) zum Ablassen des filtrierten Materials vom Filter vorgesehen sind, und mindestens einer Filteraustausch-Position (S), in welcher Mittel (20) zum Auswerfen des Filters (6) aus dem Gleitkörper (7) vorgesehen sind, **dadurch gekennzeichnet, dass** der mindestens eine Gleitkörper (7) mindestens ein Gehäuse (7b) für den zumindest einen Filter (6) umfasst, um zu ermöglichen, den Filter (6) darin aufzunehmen und durch den Gleitkörper (7) von der einen Seite bis zur anderen Seite des Gleitkörpers zu passieren.

2. Vorrichtung gemäß Anspruch 1, wobei die Auswurfmittel (20) den Filter (6) an einer Seite des Gleitkörpers (7) installieren und den Filter (6) von einer gegenüberliegenden Seite des Gleitkörpers (7) auswerfen, wobei der Filter (6) durch den Gleitkörper (7) passiert.

3. Vorrichtung gemäß einem der Ansprüche 1 oder 2, **dadurch gekennzeichnet, dass** die Auswurfmittel (20) den Filter bewegen, um ihn aus dem Gleitkörper (7) auszuwerfen und gleichzeitig mindestens einen neuen Filter (6A) zu bewegen, um ihn in den Gleitkörper (7) zu installieren.

4. Vorrichtung nach Anspruch 3, wobei der mindestens eine neue Filter (6A) zwischen den Auswurfmitteln (20) und dem Filter (6) innerhalb des Gleitkörpers (7) angeordnet ist.

5. Vorrichtung gemäß einem der vorherigen Ansprüche, wobei die Auswurfmittel (20) den Filter (6) direkt oder indirekt in eine Richtung (Y) bewegen, die in Bezug auf die Gleitrichtung (X) des Gleitkörpers (7) entweder orthogonal oder geneigt ist, um den Filter (6) aus dem Gleitkörper (7) auszuwerfen, und/oder wobei die Auswurfmittel (20) mindestens einen neuen Filter (6A) direkt oder indirekt in einer Richtung (Y) bewegen, die in Bezug auf die Gleitrichtung (X) des Gleitkörpers (7) entweder orthogonal oder geneigt ist, um den neuen Filter (6A) in den Gleitkörper (7) zu installieren.

6. Vorrichtung gemäß einem der vorherigen Ansprüche, **dadurch gekennzeichnet, dass** diese in der Austausch-Position (S) mindestens einen Träger (21) zum Tragen eines oder mehrerer aus dem Gleitkörper (7) durch die Auswurfmittel (20) ausgeworfene Filter (6) umfasst, und dadurch, dass diese in der Austausch-Position (S) mindestens einen Träger (22) zum Zuführen eines oder mehrerer neuer in den Gleitkörper (7) durch die Auswurfmittel (20) zu installierende Filter (6) umfasst.

7. Vorrichtung gemäß einem der vorherigen Ansprüche, wobei der Gleitkörper (7) mit dem Filter (6) innerhalb des Basisblocks (3) bis zu mindestens einer Filterreinigungs-Position (CF) beweglich ist, in welcher Reinigungsmittel (9) zum Zuführen eines unter Druck stehenden Flusses von filtriertem Material durch den Filter (6) in einer zu der Filtrierrichtung entgegengesetzten Richtung vorgesehen sind.

8. Vorrichtung gemäß Anspruch 8, **dadurch gekennzeichnet, dass** diese mindestens eine Bypass-Leitung (8) zum Verbinden der Auslassleitung (5) mit dem Reinigungsmittel (9) umfasst.

9. System zum Behandlung von Materialien im fluiden Zustand, umfassend eine Quelle von zu filtrierendem Material in fluidem Zustand und Mittel zum Verarbeiten des filtrierten Materials, **dadurch gekennzeichnet, dass** dieses mindestens eine Filtriervorrichtung (2) gemäß einem der vorherigen Ansprüche umfasst.

10. Verfahren zum Filtrieren von thermoplastischen Materialien mit Hilfe einer Vorrichtung (2) gemäß einem der vorherigen Ansprüche, umfassend die Schritte:
- Bewegen des Filters (6) in einer Richtung (X) bis zu mindestens einer Filtrier-Position (F) durch die Bewegung des Gleitkörpers (7) gegenüber dem Basisblock (3);
- Bewegen des Filters (6) bis zu mindestens einer Austausch-Position (S) durch die Bewegung des Gleitkörpers (7) gegenüber dem Basisblock (3) in der Richtung (X);
- Betätigen der Auswurfmittels (20), um den Filter (6) direkt oder indirekt zu bewegen, um ihn aus dem Gleitkörper (7) auszuwerfen, wobei die Auswurfmittel (20) den mindestens einen Filter (6) durch den Gleitkörper (7) bewegen, wobei der mindestens eine Gleitkörper (7) mindestens ein Gehäuse (7b) für den mindestens einen Filter (6) umfasst, um zu ermöglichen, den Filter (6) darin aufzunehmen und durch den Gleitkörper (7) von der einen Seite bis zur anderen Seite des Gleitkörpers zu passieren.

11. Verfahren gemäß Anspruch 10, wobei die Auswurfmittel (20) den Filter (6) an einer Seite des Gleitkörpers (7) installieren und den Filter (6) von einer gegenüberliegenden Seite des Gleitkörpers (7) auswerfen, wobei der Filter (6) durch den Gleitkörper (7) passiert.

12. Verfahren gemäß einem der Ansprüche 10 oder 11, umfassend den Schritt der Betätigung der Auswurfmittel (20), um den Filter (6) direkt oder indirekt zu bewegen, um ihn aus dem Gleitkörper (7) auszuwerfen und gleichzeitig mindestens einen neuen Filter (6A) zu bewegen, um ihn in den Gleitkörper (7) zu installieren.

13. Verfahren gemäß Anspruch 12, wobei der mindestens eine neue Filter (6A) zwischen den Auswurfmitteln (20) und dem Filter (6) für deren gleichzeitige Bewegung angeordnet ist.

14. Verfahren gemäß einem der Ansprüche 10 bis 13, umfassend den Schritt der Betätigung der Auswurfmittel (20) zum direkten oder indirekten Bewegen des Filters (6) in einer Richtung (Y), die in Bezug auf die Gleitrichtung (X) des Gleitkörpers (7) entweder orthogonal oder geneigt ist, um den Filter (6) aus dem Gleitkörper (7) auszuwerfen.

15. Verfahren gemäß einem der Ansprüche 10 bis 14, umfassend den Schritt der Betätigung der Auswurfmittel (20) zum direkten oder indirekten Bewegen eines neuen Filters (6A) in einer Richtung (Y), die in Bezug auf die Gleitrichtung (X) des Gleitkörpers (7) entweder orthogonal oder geneigt ist, um den neuen Filter (6A) in den Gleitkörper (7) zu installieren.

16. Filter (6, 6A), umfassend mindestens ein Filtergewebe und mindestens zwei gekoppelte Abschnitten, wobei das mindestens eine Gewebe zwischen den mindestens zwei Abschnitte angeordnet ist.

## Revendications

1. Appareil (2) de filtration de matières thermoplastiques à l'état fluide, comprenant un bloc de base (3), au moins un corps coulissant (7) qui est mobile à l'intérieur dudit bloc de base (3), et au moins un filtre (6) monté sur ledit corps coulissant et mobile avec celui-ci entre au moins une position de filtration (F) dans laquelle au moins un tuyau (4) d'amenée de la matière à filtrer jusqu'au filtre (6) et au moins un tuyau de sortie (5) d'évacuation de la matière filtrée depuis le filtre sont prévus, et au moins une position de remplacement de filtre (S) dans laquelle des moyens (20) d'éjection dudit filtre (6) depuis ledit corps coulissant (7) sont prévus, **caractérisé en ce que** ledit au moins un corps coulissant (7) comprend au moins un logement (7b) pour ledit au moins un filtre (6) pour permettre audit filtre (6) d'être logé dedans et de passer à travers ledit corps coulissant (7) d'un côté à l'autre du corps coulissant.

2. Appareil selon la revendication 1, dans lequel lesdits moyens d'éjection (20) installent ledit filtre (6) d'un côté dudit corps coulissant (7) et éjectent ledit filtre (6) depuis un côté opposé dudit corps coulissant (7), ledit filtre (6) passant à travers ledit corps coulissant (7).

3. Appareil selon la revendication 1 ou 2, **caractérisé en ce que** lesdits moyens d'éjection (20) déplacent ledit filtre pour l'éjecter depuis ledit corps coulissant (7) et, simultanément, déplacent au moins un nouveau filtre (6A) pour l'installer dans ledit corps coulissant (7).

4. Appareil selon la revendication 3, dans lequel ledit au moins un nouveau filtre (6A) est intercalé entre lesdits moyens d'éjection (20) et ledit filtre (6) à l'intérieur dudit corps coulissant (7).

5. Appareil selon l'une quelconque des revendications précédentes, dans lequel lesdits moyens d'éjection (20) déplacent directement ou indirectement ledit filtre (6) dans une direction (Y) qui est soit orthogonale, soit inclinée par rapport à la direction de coulissement (X) du corps coulissant (7) pour éjecter ledit filtre (6) depuis ledit corps coulissant (7), et/ou dans lequel lesdits moyens d'éjection (20) déplacent directement ou indirectement au moins un nouveau filtre (6A) dans une direction (Y) qui est soit orthogonale, soit inclinée par rapport à la direction de coulissement (X) dudit corps coulissant (7) pour installer ledit nouveau filtre (6A) dans ledit corps coulissant (7).

6. Appareil selon l'une quelconque des revendications précédentes, **caractérisé en ce qu'**il comprend, dans ladite position de remplacement (S), au moins un support (21) pour supporter un ou plusieurs filtres (6) éjectés depuis ledit corps coulissant (7) par lesdits moyens d'éjection (20) et **en ce qu'**il comprend, dans ladite position de remplacement (S), au moins un support (22) pour fournir un ou plusieurs nouveaux filtres (6) à installer dans ledit corps coulissant (7) par l'intermédiaire desdits moyens d'éjection (20).

7. Appareil selon l'une quelconque des revendications précédentes, dans lequel ledit corps coulissant (7) est mobile, avec ledit filtre (6), à l'intérieur dudit bloc de base (3) jusqu'à au moins une position de nettoyage de filtre (CF) dans laquelle des moyens de nettoyage (9) sont prévus pour amener un fluide sous pression de matière filtrée à travers ledit filtre (6) dans une direction opposée à la direction de filtration.

8. Appareil selon la revendication 8, **caractérisé en ce qu'**il comprend au moins un tuyau de dérivation (8) pour raccorder ledit tuyau de sortie (5) auxdits moyens de nettoyage (9).

9. Système de traitement de matières à l'état fluide, comprenant une source de matières à l'état fluide à filtrer et des moyens de traitement de la matière filtrée, **caractérisé en ce qu'**il comprend au moins un appareil de filtration (2) selon l'une des revendications précédentes.

10. Procédé de filtration de matières thermoplastiques au moyen d'un appareil (2) selon l'une quelconque des revendications précédentes, comprenant les étapes de :
- déplacement dudit filtre (6) dans une direction (X) jusqu'à au moins une position de filtration (F) grâce au déplacement dudit corps coulissant (7) par rapport audit bloc de base (3) ;
- déplacement dudit filtre (6) jusqu'à au moins une position de remplacement (F) grâce au déplacement dudit corps coulissant (7) par rapport audit bloc de base (3) dans la direction (X) ;
- actionnement desdits moyens d'éjection (20) pour déplacer directement ou indirectement ledit filtre (6) pour éjecter celui-ci depuis ledit corps coulissant (7), dans lequel lesdits moyens d'éjection (20) déplacent ledit au moins un filtre (6) à travers ledit corps coulissant (7), ledit au moins un corps coulissant (7) comprenant au moins un logement (7b) pour ledit au moins un filtre (6) pour permettre audit filtre (6) d'être logé dedans et de passer à travers ledit corps coulissant (7) d'un côté à l'autre du corps coulissant.

11. Procédé selon la revendication 10, dans lequel lesdits moyens d'éjection (20) installent ledit filtre (6) d'un côté dudit corps coulissant (7) et éjectent ledit filtre (6) depuis un côté opposé dudit corps coulissant (7), ledit filtre (6) passant à travers ledit corps coulissant (7).

12. Procédé selon la revendication 10 ou 11, comprenant l'étape d'actionnement desdits moyens d'éjection (20) pour déplacer directement ou indirectement ledit filtre (6) pour l'éjecter depuis ledit corps coulissant (7) et, simultanément, pour déplacer ledit au moins un nouveau filtre (6A) pour l'installer dans ledit corps coulissant (7).

13. Procédé selon la revendication 12, dans lequel ledit au moins un nouveau filtre (6A) est intercalé entre lesdits moyens d'éjection (20) et ledit filtre (6) pour leur déplacement simultané.

14. Procédé selon l'une quelconque des revendications 10 à 13, comprenant l'étape d'actionnement desdits moyens d'éjection (20) pour déplacer directement ou indirectement ledit filtre (6) dans une direction (Y) qui est soit orthogonale, soit inclinée par rapport à la direction de coulissement (X) du corps coulissant (7) pour éjecter ledit filtre (6) depuis ledit corps coulissant (7).

15. Procédé selon l'une quelconque des revendications 10 à 14, comprenant l'étape d'actionnement desdits moyens d'éjection (20) pour déplacer directement ou indirectement un nouveau filtre (6A) dans une direction (Y) qui est soit orthogonale, soit inclinée par rapport à la direction de coulissement (X) dudit corps coulissant (7) pour installer ledit nouveau filtre (6A) dans ledit corps coulissant (7).

16. Filtre (6, 6A) comprenant au moins une toile de filtre et au moins deux portions couplées, ladite au moins une toile étant logée entre lesdites au moins deux portions.
